# FASCICULE DE BREVET EUROPEEN

(11) **EP 2 732 517 B1**
(45) Date de publication et mention de la délivrance du brevet: **06.09.2017**
(21) Numéro de dépôt: 12745891.7
(22) Date de dépôt: 06.07.2012
(51) Int. Cl.: H02G 3/04, H02G 3/06, F16B 7/04

(54) **ECLISSE PIVOTANTE DESTINÉE AU RACCORDEMENT DE TRONÇONS DE CHEMIN DE CÂBLES EN FILS**
KLAMMER ZUM VERBINDEN VON GITTERRINNEN FÜR KABEL
PIVOTING SPLICE PLATE FOR CONNECTING SEGMENTS OF A WIRE-BASED CABLE TRAY

(30) Priorité: 13.07.2011 FR 1156385
(43) Date de publication de la demande: 21.05.2014
(73) Titulaire: Legrand France, 87000 Limoges (FR); Legrand SNC, 87000 Limoges (FR)
(72) Inventeur: GREVECHE, Cécile, F-53600 Châtres La Forêt (FR); ADAM, Damien, F-72240 Domfront en Champagne (FR); BETHOULE, Julien, F- 72000 Le Mans (FR); DECORE, Raphaël, F-72140 Sille Le Guillaume (FR); BELLANGER, Jérôme, F-72650 Saint Saturnin (FR)
(74) Mandataire: Santarelli
(86) Numéro de dépôt international: PCT/FR2012/051607
(87) Numéro de publication internationale: WO 2013/007936

(56) Documents cités:
- EP-B1- 1 360 749
- FR-A1- 2 711 208
- FR-A1- 2 937 400
- FR-A1- 2 947 676

## Description

La présente invention concerne une éclisse pivotante destinée au raccordement de tronçons de chemin de câbles en fils.

Le domaine de la présente invention est l'éclissage de tronçons de chemin de câbles en fils. On utilise de tels tronçons pour réaliser un chemin de câbles assurant le soutien, le logement et la protection d'éléments longilignes, généralement souples, tels des câbles électriques mais également des tubes, par exemple des tubes de liaison pneumatique ou hydraulique, des fibres optiques, .... Dans la suite de la présente description, dans un souci de simplification et de clarté, il sera question uniquement de câbles électriques. Il ne s'agira alors nullement d'une limitation de l'utilisation desdits chemins de câbles.

Un chemin de câbles en fils présente généralement une forme allongée et une section en U. Il comporte des fils longitudinaux, appelés fils de chaîne, et des fils transversaux, appelés fils de trame. Les fils de chaîne sont le plus souvent des fils rectilignes tandis que les fils de trame présentent une forme en U. Tous ces fils sont soudés les uns aux autres de manière à être régulièrement espacés. On réalise de la sorte un chemin de câbles en fils, présentant une structure en treillis, qui comporte un fond destiné à servir de support aux câbles électriques et des parois latérales, ou ailes, destinées à maintenir lesdits câbles sur le fond en formant une goulotte.

Un chemin de câbles est le plus souvent constitué de plusieurs tronçons de chemins de câbles assemblés bout à bout, ou faisant un angle entre eux, ou bien encore réalisant une dérivation en T, en X, en Y ou autre. Pour raccorder alors de tels tronçons, il est connu d'utiliser des dispositifs de raccordement appelés communément éclisses.

De nombreux types d'éclisses existent (voir par exemple les documents FR 2 937 400, FR 2 711 208 et FR 2 947 676) et seuls certains types d'entre elles seront évoqués ici. On peut ainsi par exemple ici citer les éclisses telles celles révélées par le document EP-1 360 749. Ces éclisses sont destinées à être montées sur les ailes latérales d'un chemin de câbles en fils. Il est prévu également dans ce document de pré-équiper un tronçon de chemin de câbles avec des éclisses divulguées dans ce document. L'opération d'éclissage est alors simplifiée.

Le document WO-2009/007020 ne concerne pas une éclisse mais des tronçons de chemin de câbles pouvant être raccordés sans faire appel à des éclisses. De tels tronçons de chemin de câbles sont configurés à une de leur extrémité de manière à présenter un logement, d'une seule pièce avec ledit tronçon de chemin de câbles, ledit logement étant destiné à accueillir un fil de trame d'extrémité d'un tronçon de chemin de câbles similaire.

À l'usage, on remarque que de tels tronçons de chemin de câbles sont surtout prévus pour réaliser l'éclissage de deux tronçons similaires. Toutefois, dès qu'il est nécessaire de raccourcir un tronçon de chemin de câbles, il convient de prévoir des éclisses « classiques » pour assurer une liaison au niveau de la découpe réalisée. Deux techniques d'éclissages doivent donc être prévues pour la réalisation d'un chemin de câbles mettant en oeuvre plusieurs tronçons de chemin de câbles tels que décrits dans ce document de l'art antérieur WO-'020.

La présente invention a pour but de fournir une nouvelle éclisse pour tronçons de chemin de câbles en fils. De manière originale, cette éclisse pourra avantageusement être prémontée de manière démontable sur un tronçon de chemin de câbles en fils, de telle sorte que cette éclisse, disposée en bout d'un tronçon de chemin de câbles, soit prête à accueillir un autre tronçon de manière à assurer leur éclissage tout en pouvant être démontée et réutilisée dans le cas où un tronçon de chemin de câbles doit être découpé pour adapter la longueur du chemin de câbles correspondant.

Avantageusement, une éclisse selon la présente invention permettra de réaliser un éclissage avec de bonnes performances mécaniques. Elle s'intégrera également dans le chemin de câbles de préférence de manière à ne pas former un obstacle agressif pour les câbles électriques destinés à prendre place à l'intérieur du chemin de câbles.

À cet effet, la présente invention propose une éclisse selon la revendication 1.

Une telle éclisse peut être mise en place en la faisant pivoter par rapport à des fils de trame d'extrémité de tronçons de chemin de câbles mis bout à bout et ensuite maintenue à l'aide de sa patte de verrouillage sur un fil de chaîne d'un tronçon de chemin de câbles. Le fait d'avoir des logements pour les fils de trame d'extrémité avec des concavités orientées dans des directions opposées permet un bon positionnement et un bon maintien des tronçons de chemin de câbles éclissés.

Afin de pouvoir réaliser un prémontage d'une éclisse selon la présente invention sur une extrémité d'un tronçon de chemin de câbles, des seconds moyens de verrouillage sont par exemple associés au premier logement de manière à permettre le verrouillage d'un fil de trame d'extrémité à l'intérieur du premier logement. De la sorte, l'éclisse peut être montée de manière pivotante autour du fil de trame se trouvant dans le premier logement. Elle peut alors pivoter entre une position "en attente" dans laquelle la patte de verrouillage se trouve par exemple à l'intérieur du tronçon de chemin de câbles sur lequel l'éclisse est montée et une position éclissée dans laquelle un fil de trame d'extrémité d'un second tronçon de chemin de câbles vient prendre place dans le second logement du corps de liaison.

Une forme de réalisation d'une éclisse de raccordement selon l'invention prévoit que le corps de liaison présente une paroi dorsale de laquelle s'étendent deux ailes latérales, que le premier logement débouche dans la paroi dorsale, et que le deuxième logement est obtenu par découpe dans les ailes latérales. Avec cette forme de réalisation, dans la position montée, la paroi dorsale se trouve dans le chemin de câbles. En adaptant la forme de cette paroi dorsale, on peut alors limiter la présence d'arêtes agressives pour les câbles se trouvant dans le chemin de câbles. Cette forme de réalisation permet également de prolonger chacune des découpes des ailes latérales formant le deuxième logement par une rainure de guidage en forme d'arc réalisée dans les ailes latérales. Cette rainure de guidage permet de guider le mouvement de l'éclisse lors de son pivotement en venant faire coulisser un fil de trame d'extrémité d'un second tronçon de chemin de câbles dans ladite rainure de guidage. Toujours dans cette forme de réalisation, pour avoir une structure symétrique, on prévoit par exemple que les deux ailes latérales se trouvent de part et d'autre du troisième logement. Pour une meilleure intégration de l'éclisse de raccordement selon l'invention dans la position montée, la paroi dorsale du corps de liaison présente avantageusement un quatrième logement parallèle au troisième logement et aligné avec celui-ci, l'ouverture du quatrième logement étant orientée à l'opposé de celle du troisième logement.

Dans une éclisse de raccordement selon l'invention, la patte de verrouillage se présente par exemple sous la forme d'une plaque sensiblement plane dans laquelle est réalisée une rainure formant le troisième logement.

Une éclisse selon l'invention peut être réalisée à partir d'une tôle découpée et pliée.

La présente invention concerne également un ensemble formé d'un tronçon de chemin de câbles et d'au moins une éclisse telle que décrite ci-dessus. On peut aussi prévoir que toutes les éclisses sont telles que décrites ci-dessus. Dans un tel ensemble -avec une ou plusieurs éclisses selon l'invention-, le tronçon de chemin de câbles en fils est par exemple du type comportant d'une part des fils de chaîne longitudinaux et d'autre part des fils de trame transversaux de manière à définir une goulotte présentant un fond délimité par deux parois latérales, et alors chaque éclisse est par exemple montée entre deux parois latérales de deux tronçons alignés.

Des détails et avantages de la présente invention ressortiront mieux de la description qui suit, faite en référence aux dessins schématiques annexés sur lesquels :
La figure 1 montre une éclisse selon la présente invention en perspective,
La figure 2 montre l'éclisse de la figure 1 en perspective mais vue sous un autre angle,
La figure 3 montre en perspective deux éclisses selon la présente invention prémontées sur une extrémité de tronçon de chemin de câbles,
La figure 4 correspond à la vue de la figure 3 avec un second tronçon de chemin de câbles en cours d'éclissage des deux tronçons de chemin de câbles,
La figure 5 correspond à la vue de la figure 4, les deux tronçons de chemin de câbles étant éclissés, et
La figure 6 montre en perspective l'utilisation d'une éclisse telle celle montrée sur les figures précédentes pour réaliser un éclissage dans le fond d'un chemin de câbles.

Les figures jointes montrent une forme de réalisation préférée d'une éclisse selon la présente invention. D'autres formes de réalisation sont envisageables. Des variantes de réalisation sont suggérées dans la description qui suit mais la présente invention n'est pas limitée à ces variantes.

L'éclisse représentée sur les figures ci-jointes est réalisée par découpe et pliage d'une tôle, par exemple une tôle en acier galvanisé.

L'éclisse selon la présente invention comporte un corps de liaison 2 et une patte de verrouillage 4 qui ne forment qu'une seule pièce.

La forme du corps de liaison 2 est relativement complexe et est décrite ci-après. En première approximation, ce corps de liaison 2 présente une forme d'étrier avec une base 6, une aile latérale supérieure 8 et une aile latérale inférieure 10.

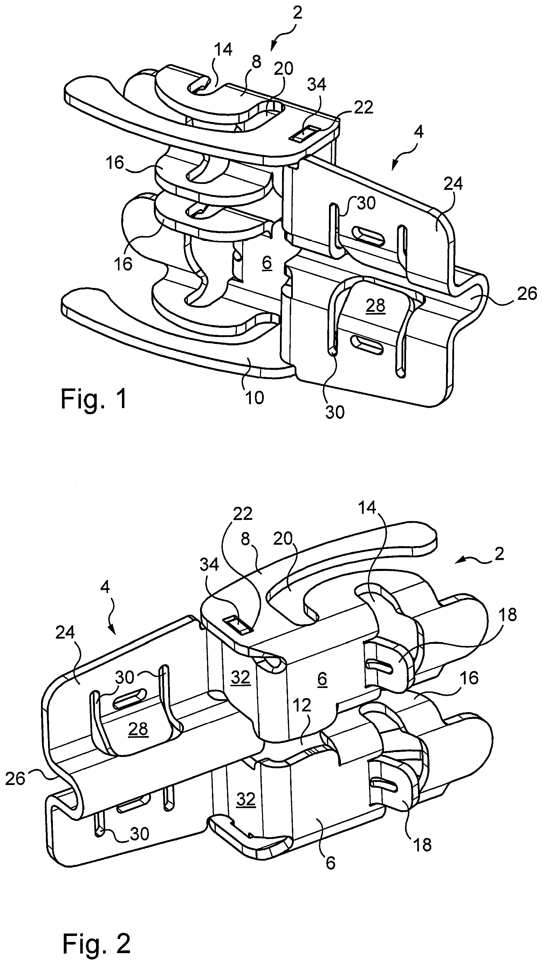

On suppose dans la présente description des figures 1 à 5 que les éclisses représentées sont orientées de telle sorte que la base 6 décrite se trouve dans un plan vertical et que les ailes latérales sont quant à elles chacune dans un plan horizontal.

La base 6 est sensiblement plane et comporte deux fentes, une fente horizontale 12 et une fente verticale 14.

La fente horizontale 12 s'étend sur toute la longueur de la base 6 et coupe donc la base 6 en deux, de préférence de manière symétrique.

De part et d'autre de la fente horizontale 12 s'étendent des languettes de guidage 16. Ces dernières s'étendent perpendiculairement à la base 6, parallèlement à l'aile latérale supérieure 8 et à l'aile latérale inférieure 10, entre celles-ci, et sont espacées l'une de l'autre d'environ 5 mm (valeur donnée à titre illustratif et nullement limitatif).

La fente verticale 14 s'étend sur toute la hauteur de la base 6. Elle est obtenue par une découpe qui se prolonge, d'une part, dans l'aile latérale supérieure 8 et dans l'aile latérale inférieure 10 et, d'autre part, dans les languettes de guidage 16. Cette découpe forme un logement, destiné à recevoir un fil de trame d'extrémité (comme expliqué plus loin) qui débouche du côté de la base 6 et dont la concavité est orientée vers l'extérieur de l'étrier formé par le corps de liaison 2.

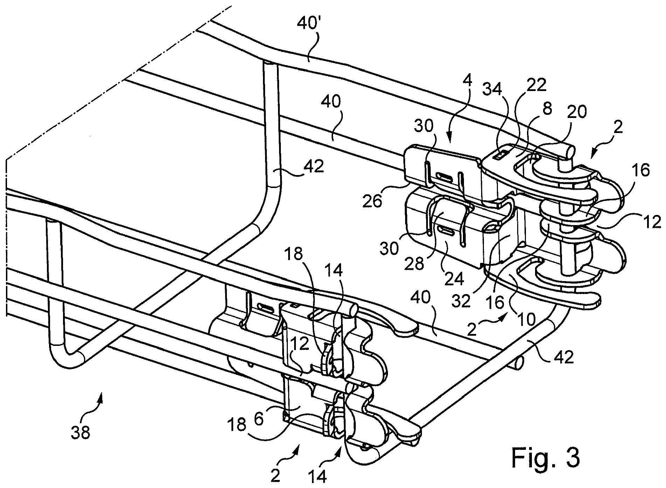

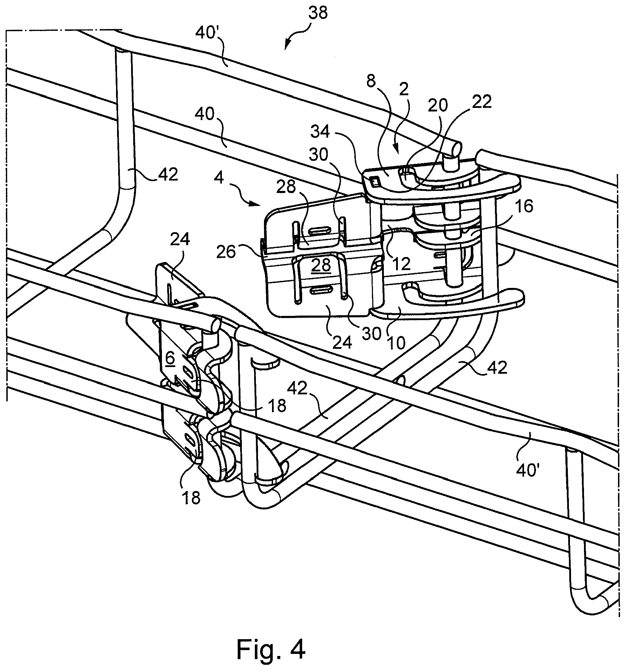

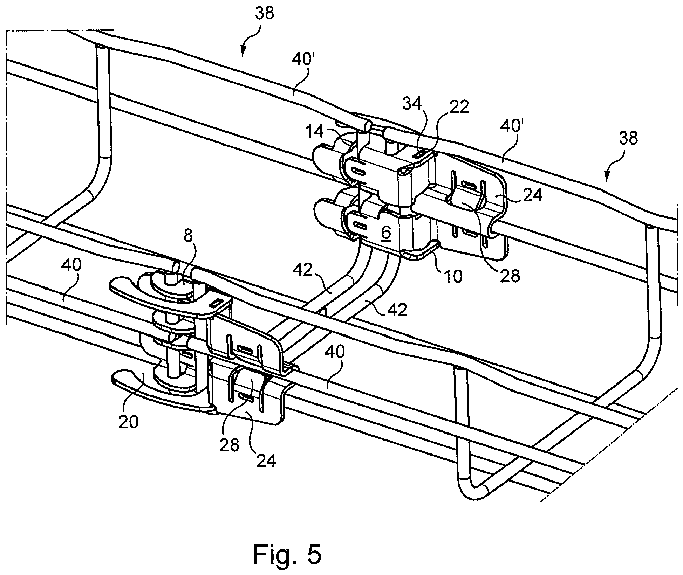

On remarque notamment sur la figure 2 la présence de deux languettes de verrouillage 18 qui s'étendent depuis la base 6, et plus précisément depuis un bord de la fente verticale 14. Les languettes de verrouillage 18 sont déformables élastiquement et sont destinées à prendre deux positions. Dans une première position (figures 2 et 3 par exemple), les languettes de verrouillage 18 sont pliées vers l'extérieur de l'étrier formant le corps de liaison 2 en formant avec la base 6 un angle de l'ordre de 90° (par exemple compris entre 60° et 180°). De la sorte, la fente verticale 14 est accessible pour accueillir un fil de trame, notamment un fil de trame d'extrémité. Dans une seconde position (figures 4 et 5 par exemple), les languettes sont sensiblement dans le plan de la base 6 et ferment ainsi l'accès à la fente verticale 14.

L'aile latérale supérieure 8 s'étend perpendiculairement à la base 6 et est raccordée à cette dernière par un arrondi. Comme on peut le voir sur les figures 1 et 2 notamment l'aile latérale supérieure 8 comporte trois découpes.

Une première découpe a déjà été décrite et correspond à la fente verticale 14. Elle est destinée à réaliser un premier logement pour un fil de trame d'extrémité comme il sera expliqué plus loin.

Une deuxième découpe 20 forme un deuxième logement pour un fil de trame d'extrémité. Cette deuxième découpe 20 comporte une première partie qui s'étend perpendiculairement à la base 6 et dont la concavité est orientée vers l'intérieur de l'étrier formé par le corps de liaison 2, c'est-à-dire à l'opposé de la découpe formant la fente verticale 14. Cette deuxième découpe 20 est réalisée uniquement dans l'aile latérale supérieure 8, éventuellement dans l'arrondi reliant cette aile à la base 6, mais ne s'étend pas à travers la base 6. La première partie de la découpe est prolongée par une seconde partie de découpe en forme globale d'arc qui s'étend autour de la première découpe (correspondant à la fente verticale 14) et qui débouche dans un bord de l'aile latérale supérieure 8 opposé à la patte de verrouillage 4.

La troisième découpe 22 est ici une découpe rectangulaire utilisée à des fins constructives pour réaliser une liaison mécanique.

L'aile latérale inférieure 10 reprend la même forme que l'aile latérale supérieure 8 et n'est donc pas décrite en détails ici.

La patte de verrouillage 4 comporte une plaque 24 sensiblement plane qui s'étend parallèlement à la base 6 mais décalée par rapport à cette dernière et se trouve du même côté de la base 6 que l'aile latérale supérieure 8 et l'aile latérale inférieure 10.

La plaque 24 comporte une rainure 26 médiane qui s'étend horizontalement et au même niveau que la fente horizontale 12. La rainure 26 forme un bossage dans la plaque 24 qui s'étend vers la base 6 du corps de liaison 2. Comme il sera expliqué par la suite, la rainure 26 forme un troisième logement destiné à recevoir un fil de chaîne d'un tronçon de chemin de câbles.

La patte de verrouillage 4 comporte aussi deux languettes d'encliquetage 28 obtenues chacune par une découpe 30 réalisée dans la plaque 24. Chaque découpe 30 est en forme de U. La base du U est disposée longitudinalement dans la rainure 26 et les ailes du U s'étendent transversalement par rapport à la rainure 26. Le bord libre de chaque languette d'encliquetage 28 est orienté vers le fond de la rainure 26 mais fait saillie vers l'intérieur de celle-ci. De la sorte, chaque languette d'encliquetage 28 peut se déformer élastiquement lorsque l'on tente d'introduire un objet, fil de chaîne par exemple, dans la rainure 26 mais forme un obstacle pour retirer ledit objet lorsque celui-ci repose au fond de la rainure 26.

La patte de verrouillage 4 est reliée au corps de liaison 2 par des pattes de liaison 32. Chaque patte de liaison 32 s'étend à la fois perpendiculairement à la base 6 (et donc aussi à la plaque 24) et perpendiculairement à l'aile latérale supérieure 8 (et donc aussi à l'aile latérale inférieure 10). Chaque patte de liaison 32 est reliée à la plaque 24 et à la base 6 par une zone de pliage (à 90°) arrondie. Les pattes de liaison 32 présentent des saillies 34 qui viennent s'introduire dans les troisièmes découpes 22 afin de rigidifier l'éclisse et plus particulièrement la liaison entre la patte de verrouillage 4 et le corps de liaison 2.

Les figures 3 à 5 illustrent l'utilisation de l'éclisse des figures 1 et 2 pour relier deux tronçons de chemin de câbles 38. On considère ici un chemin de câbles en fils qui présente des fils de chaîne 40 longitudinaux rectilignes ainsi que des fils de trame 42 transversaux en forme de U. On remarque que certains fils de chaîne ne sont pas parfaitement rectilignes. Il s'agit des fils de rive 40' qui présentent des décrochements. En effet, le chemin de câbles représenté ici est réalisé conformément à l'invention décrite dans le document EP-0 298 825 et, plus particulièrement, ce chemin de câbles est du type de celui montré sur la figure 4 de ce document. Un tel chemin de câbles comporte un fond avec deux ailes latérales.

La figure 3 montre comment une éclisse selon l'invention telle que montrée sur les figures 1 et 2 peut prendre place à l'extrémité d'un tronçon de chemin de câbles 38. Une éclisse est positionnée sur chaque aile latérale du tronçon de chemin de câbles 38 de telle sorte que le fil de trame 42 d'extrémité vienne loger dans la fente verticale 14 et de telle sorte qu'un fil de chaîne 40 de l'aile latérale du chemin de câbles vienne prendre place dans la fente horizontale 12 du corps de liaison 2. La patte de verrouillage 4 est positionnée à l'intérieur du chemin de câbles. Le bossage correspondant à la rainure 26 vient reposer contre le fil de chaîne 40 logé dans la fente horizontale 12.

Sur la figure 3, les languettes de verrouillage 18 sont "ouvertes" de manière à permettre l'introduction du fil de trame 42 d'extrémité dans le premier logement correspondant à la fente verticale 14. Une fois ce fil de trame 42 d'extrémité positionné dans ce premier logement (dans la position illustrée sur la figure 3 ou dans toute autre position relative possible entre ledit fil de trame 42 d'extrémité et l'éclisse) les languettes de verrouillage 18 sont "fermées" de manière à venir emprisonner ledit fil de trame 42 d'extrémité dans son logement.

La figure 4 illustre les deux éclisses de la figure 3 avec les languettes de verrouillage 18 fermées. Un second tronçon de chemin de câbles 38 est également venu prendre place dans le prolongement du premier tronçon illustré sur la figure 3. L'éclisse ainsi montée peut pivoter autour du fil de trame 42 d'extrémité et la figure 4 montre une position pivotée d'environ 30°. La deuxième découpe 20 dans les ailes latérales supérieures 8 (et donc aussi la découpe correspondante des ailes latérales inférieures 10) est réalisée de telle sorte que lorsque l'éclisse pivote de manière à ce que la patte de verrouillage 4 se rapproche du second tronçon de chemin de câbles 38 (celui sur lequel l'éclisse n'était pas montée initialement), le fil de trame 42 d'extrémité du second tronçon de chemin de câbles 38 vient coulisser à l'intérieur de cette deuxième découpe 20.

Au fur et à mesure que l'éclisse pivote autour de son fil de trame d'extrémité 42 de manière à ce que la patte de verrouillage se rapproche du second tronçon de chemin de câbles 38, le fil de trame d'extrémité 42 du second tronçon de chemin de câbles pénètre progressivement dans la deuxième découpe 20 jusqu'à arriver au fond de celle-ci lorsque l'éclisse a pivoté d'environ 180° par rapport à sa position initiale illustrée sur la figure 3. L'aile latérale supérieure 8 et l'aile latérale inférieure 10 forment alors chacune un crochet qui vient accrocher le fil de trame d'extrémité du second tronçon de chemin de câbles.

La position finale éclissée est représentée sur la figure 5. Dans cette position le fil de trame 42 d'extrémité se trouve dans le premier logement défini par la fente verticale 14 du corps de liaison ; le fil de trame d'extrémité 42 du second tronçon de chemin de câbles se trouve dans le deuxième logement, au fond de la deuxième découpe 20 et un fil de chaîne 40 est prisonnier dans la rainure 26 de la patte de verrouillage 4. En effet, peu avant la fin du pivotement de l'éclisse autour de son fil de trame 42 d'extrémité, un fil de chaîne 40 du second tronçon de chemin de câbles 38 vient en appui contre les languettes d'encliquetage 28 qui sont conformées pour se déformer élastiquement lorsqu'un fil de chaîne vient pénétrer dans la rainure 26 correspondante. En continuant le pivotement, les languettes d'encliquetage 28 se déforment et laissent passer ledit fil de chaîne 40. Une fois le fil passé, les languettes d'encliquetage 28 reviennent dans leur position dite de repos (illustrée par exemple sur les figures 1 et 2). La distance séparant les bords libres de deux languettes d'encliquetage 28 d'une même patte de verrouillage 4 est choisie inférieure au diamètre du fil de chaîne 40 venant prendre place dans la rainure 26. De la sorte, le fil de chaîne 40 se trouvant au fond de la rainure 26 ne peut pas ressortir, sauf à venir déformer l'une des (ou les deux) languettes d'encliquetage 28.

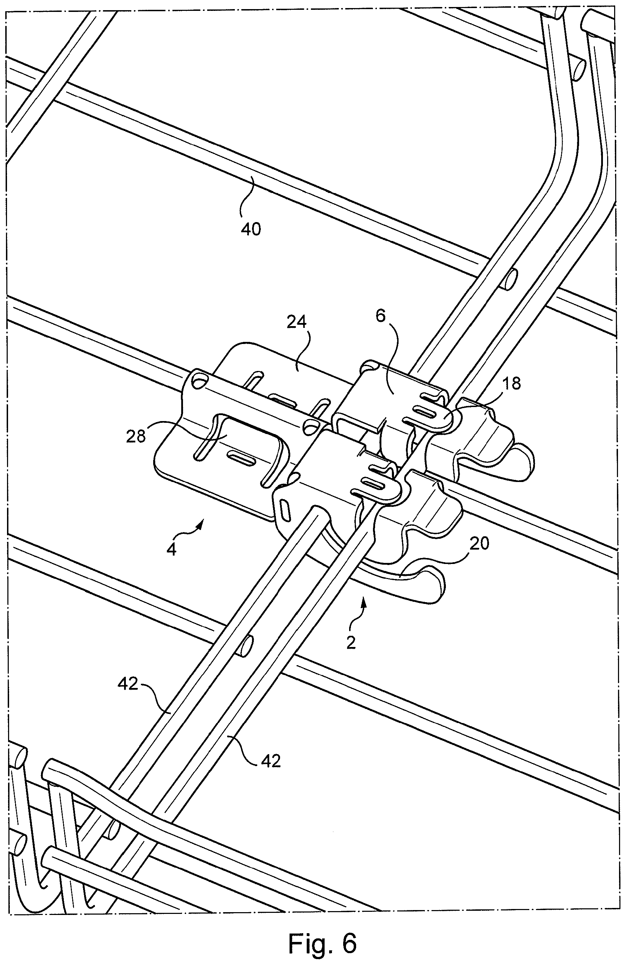

La figure 6 illustre le positionnement d'une éclisse telle celle des figures 1 et 2 au fond d'un chemin de câbles. On peut prévoir de venir placer une éclisse au fond du chemin de câbles lorsque ce dernier est de grande largeur et/ou lorsque la charge prévue dans le chemin de câbles est élevée.

En fond de chemin de câbles, l'éclissage est réalisé de la même manière que sur les ailes du chemin de câbles. Toutefois les orientations (horizontale ou verticale) données en référence aux figures 1 à 5 ne sont plus valables ici.

Comme il ressort de la description qui précède, une éclisse selon la présente invention peut être prémontée à l'extrémité d'un tronçon de chemin de câbles. Pour limiter l'encombrement du tronçon de chemin de câbles, une éclisse est montée sur chaque aile du tronçon dans la position illustrée sur la figure 3 avec toutefois les languettes de verrouillage 18 rabattues (pour être sensiblement dans le plan de la base 6 correspondante). Pour alors réaliser l'éclissage avec un autre tronçon de chemin de câbles, il suffit de venir placer cet autre tronçon dans le prolongement du premier tronçon, du côté muni d'éclisses, et de faire pivoter ces éclisses chacune d'environ 180°.

S'il n'est pas prévu de réaliser un éclissage à l'extrémité du tronçon de chemin de câbles muni d'éclisses ou bien si le tronçon doit être coupé à longueur, il est facile de retirer les éclisses : il suffit en effet, avec par exemple un tournevis, de venir ouvrir les languettes de verrouillage 18 pour facilement démonter les éclisses de l'extrémité du tronçon sur lequel elles se trouvent.

Une éclisse selon la présente invention n'est pas agressive vis-à-vis des câbles destinés à venir prendre place dans un chemin de câbles sur lequel elle est montée. Comme on peut le remarquer sur les figures annexées, dans la position montée c'est essentiellement la base 6 du corps de liaison 2 qui vient prendre place dans le chemin de câbles. Cette base 6 est de préférence plane et le nombre d'arête agressive pouvant venir au contact des câbles destinés à prendre place dans le chemin de câbles est très limité.

Un éclissage réalisé selon la présente invention permet d'assurer une bonne résistance mécanique et une bonne liaison des tronçons de chemin de câbles. Comme il ressort de la description qui précède, au niveau du fond du chemin de câbles, il est possible de bien maintenir les deux fils de trame d'extrémité des tronçons de chemin de câbles afin d'assurer une bonne liaison et une bonne tenue à la charge en utilisant une troisième (voire quatrième) éclisse.

La présente invention peut également concerner une éclisse simplifiée par rapport à la forme de réalisation reprise sur les dessins joints.

Dans la forme de réalisation préférée, un quatrième logement prévu pour un fil de chaîne est prévu dans la base du corps de liaison, entre deux languettes de guidage. Ces dernières pourraient être supprimées sans sortir du cadre de l'invention. Le quatrième logement est lui aussi optionnel. Le corps de liaison pourrait être réalisé de telle sorte qu'il vienne (en position montée éclissée) prendre place entre deux fils de chaîne voisins -et non pas à cheval sur un fil de chaîne comme proposé par la forme de réalisation préférée-.

Les crochets réalisés dans les ailes latérales du corps de liaison de l'éclisse sont originaux et permettent de faciliter l'éclissage. Toutefois ils sont optionnels et les deuxièmes découpes dans les ailes pourraient présenter une forme similaire à la forme des découpes correspondant aux premières découpes correspondant à la fente verticale, mais avec une orientation opposée.

Les moyens de verrouillage de la patte de verrouillage sont des languettes élastiquement déformables. Il serait également possible de prévoir, sans sortir du cadre de la présente invention, d'autres moyens de verrouillage associés à cette patte de verrouillage, tels par exemple des languettes de verrouillage telles celles utilisées pour maintenir un fil de trame d'extrémité dans le premier logement d'une éclisse selon la présente invention.

Bien entendu, la présente invention ne se limite pas à la forme de réalisation préférée décrite ci-dessus et aux variantes évoquées. Elle concerne également toutes les autres variantes de réalisation à la portée de l'homme du métier dans le cadre des revendications ci-après.

## Revendications

1. Éclisse destinée au raccordement de tronçons de chemin de câbles (38) en fils, chaque tronçon de chemin de câbles en fils comportant, d'une part, des fils de chaîne (40, 40') longitudinaux et, d'autre part, des fils de trame (42) transversaux, le raccordement desdits tronçons de chemins de câbles étant effectué en reliant un premier fil de trame (42) d'extrémité d'un premier tronçon avec un second fil de trame (42) d'extrémité d'un second tronçon,
laquelle éclisse comporte :
- un corps de liaison (2) avec
un premier logement (14) présentant un fond concave destiné à recevoir ledit premier fil de trame (42) d'extrémité,
un deuxième logement (20) destiné à recevoir ledit second fil de trame (42) d'extrémité, parallèle au premier logement et présentant un fond concave, et
- une patte de verrouillage (4) liée au corps de liaison (2) et présentant, d'une part, un troisième logement (26) destiné à recevoir un fil de chaîne (40) et s'étendant perpendiculairement au premier logement et au deuxième logement et, d'autre part, des premiers moyens de verrouillage (28) permettant le verrouillage d'un fil de chaîne (40) dans le troisième logement (26),
**caractérisé en ce que** la concavité du fond concave du deuxième logement (20) est orientée à l'opposé de la concavité du fond concave du premier logement (14).

2. Éclisse de raccordement selon la revendication 1, **caractérisée en ce que** des seconds moyens de verrouillage (18) sont associés au premier logement (14) de manière à permettre le verrouillage d'un fil de trame (42) d'extrémité à l'intérieur du premier logement.

3. Éclisse de raccordement selon l'une des revendications 1 ou 2, **caractérisée en ce que** le corps de liaison (2) présente une paroi dorsale (6) de laquelle s'étendent deux ailes latérales (8, 10), **en ce que** le premier logement (14) débouche dans la paroi dorsale (6), et **en ce que** le deuxième logement est obtenu par découpe (20) dans les ailes latérales (8, 10).

4. Éclisse de raccordement selon la revendication 3, **caractérisée en ce que** les découpes dans les ailes latérales (8, 10) formant le deuxième logement sont prolongées chacune par une rainure de guidage en forme d'arc réalisée dans les ailes latérales (8, 10).

5. Éclisse de raccordement selon l'une des revendications 3 ou 4, **caractérisée en ce que** les deux ailes latérales (8, 10) se trouvent de part et d'autre du troisième logement (26).

6. Éclisse de raccordement selon la revendication 5, **caractérisée en ce que** la paroi dorsale (6) du corps de liaison (2) présente un quatrième logement parallèle au troisième logement et aligné avec celui-ci, l'ouverture du quatrième logement étant orientée à l'opposé de celle du troisième logement.

7. Éclisse de raccordement selon l'une des revendications 1 à 5, **caractérisée en ce que** la patte de verrouillage (4) se présente sous la forme d'une plaque (24) sensiblement plane dans laquelle est réalisée une rainure (26) formant le troisième logement.

8. Éclisse selon l'une des revendications 1 à 6, **caractérisée en ce qu'**elle est réalisée à partir d'une tôle découpée et pliée.

9. Ensemble formé d'un tronçon de chemin de câbles et d'au moins une éclisse, **caractérisé en ce qu'**au moins une éclisse est une éclisse selon l'une des revendications 1 à 8.

10. Ensemble selon la revendication 9, **caractérisé en ce que** chaque éclisse est une éclisse selon l'une des revendications 1 à 8.

11. Ensemble selon l'une des revendications 9 ou 10, **caractérisé en ce que** le tronçon de chemin de câbles (38) en fils comporte d'une part des fils de chaîne (40, 40') longitudinaux et d'autre part des fils de trame (42) transversaux de manière à définir une goulotte présentant un fond délimité par deux parois latérales, et **en ce que** chaque éclisse est montée entre deux parois latérales de deux tronçons alignés.

## Patentansprüche

1. Verbinder zum Verbinden von Gitterkabelrinnenabschnitten (38), wobei jeder Gitterkabelrinnenabschnitt einerseits längs verlaufende Kettdrähte (40, 40') und andererseits quer verlaufende Schussdrähte (42) umfasst, wobei das Verbinden der Kabelrinnenabschnitte dadurch erfolgt, dass ein erster Endschussdraht (42) eines ersten Abschnitts mit einem zweiten Endkettdraht (42) eines zweiten Abschnitts verbunden wird,
wobei der Verbinder umfasst:
- einen Verbindungskörper (2) mit
einer ersten Aufnahme (14) mit einem konkaven Boden zum Aufnehmen des ersten Endschussdrahts (42),
einer zweiten Aufnahme (20) zum Aufnehmen des zweiten Endschussdrahts (42), die zur ersten Aufnahme parallel verläuft und einen konkaven Boden aufweist, und
- einen mit dem Verbindungskörper (2) verbundenen Verriegelungslasche (4), der einerseits eine zur ersten Aufnahme und zur zweiten Aufnahme senkrecht verlaufende dritte Aufnahme (26) zum Aufnehmen eines Kettdrahts (40) und andererseits erste Rastmittel (28) aufweist, die das Verrasten eines Kettdrahts (40) in der dritten Aufnahme (26) ermöglichen,
**dadurch gekennzeichnet, dass** die Konkavität des konkaven Bodens der zweiten Aufnahme (20) entgegengesetzt zur Konkavität des konkaven Bodens der ersten Aufnahme (14) ausgerichtet ist.

2. Verbinder nach Anspruch 1,
**dadurch gekennzeichnet, dass** der ersten Aufnahme (14) zweite Rastmittel (18) zugeordnet sind, derart, dass ein Endschussdraht (42) innen in der ersten Aufnahme verrasten kann.

3. Verbinder nach einem der Ansprüche 1 oder 2,
**dadurch gekennzeichnet, dass** der Verbindungskörper (2) eine Rückwand (6) aufweist, von der aus zwei Seitenflügel (8, 10) verlaufen, dass die erste Aufnahme (14) in die Rückwand (6) mündet, und dass die zweite Aufnahme durch einen Ausschnitt (20) in den Seitenflügeln (8, 10) erlangt wird.

4. Verbinder nach Anspruch 3,
**dadurch gekennzeichnet, dass** die die zweite Aufnahme bildenden Ausschnitte in den Seitenflügeln (8, 10) jeweils durch eine in den Seitenflügeln (8, 10) ausgeführte bogenförmige Führungsrille verlängert sind.

5. Verbinder nach einem der Ansprüche 3 oder 4,
**dadurch gekennzeichnet, dass** sich die beiden Seitenflügel (8, 10) beidseits der dritten Aufnahme (26) befinden.

6. Verbinder nach Anspruch 5,
**dadurch gekennzeichnet, dass** die Rückwand (6) des Verbindungskörpers (2) eine zur dritten Aufnahme parallele und mit dieser fluchtend angeordnete vierte Aufnahme aufweist, wobei die Öffnung der vierten Aufnahme entgegengesetzt zu der der dritten Aufnahme ausgerichtet ist.

7. Verbinder nach einem der Ansprüche 1 bis 5,
**dadurch gekennzeichnet, dass** der Verriegelungslasche (4) die Form einer im Wesentlichen ebenen Platte (24) hat, in der eine die dritte Aufnahme bildende Rille (26) ausgeführt ist.

8. Verbinder nach einem der Ansprüche 1 bis 6,
**dadurch gekennzeichnet, dass** er aus einem ausgeschnittenen und gebogenen Blech realisiert ist.

9. Einheit, gebildet aus einem Kabelrinnenabschnitt und wenigstens einem Verbinder,
**dadurch gekennzeichnet, dass** es sich bei wenigstens einem Verbinder um einen Verbinder nach einem der Ansprüche 1 bis 8 handelt.

10. Einheit nach Anspruch 9,
**dadurch gekennzeichnet, dass** es sich bei jedem Verbinder um einen Verbinder nach einem der Ansprüche 1 bis 8 handelt.

11. Einheit nach einem der Ansprüche 9 oder 10,
**dadurch gekennzeichnet, dass** der Gitterkabelrinnenabschnitt (38) einerseits längs verlaufende Kettdrähte (40, 40') und andererseits quer verlaufende Schussdrähte (42) umfasst, derart, dass eine Rinne mit einem von zwei Seitenwänden begrenzten Boden gebildet wird, und dass jeder Verbinder zwischen zwei Seitenwänden von zwei fluchtend angeordneten Abschnitten angebracht ist.

## Claims

1. Splice plate for connecting wire cable tray segments (38), each wire cable tray segment comprising both longitudinal warp wires (40, 40') and transverse weft wires (42), the connection of said cable tray segments being made by connecting a first end weft wire (42) of a first segment to a second end weft wire (42) of a second segment,
said splice plate comprising:
- a linking body (2) including
a first recess (14) which has a concave bottom and is intended for receiving said first end weft wire (42),
a second recess (20) which is intended for receiving said second end weft wire (42), is parallel to the first recess and has a concave bottom, and
- a locking tab (4) linked to the linking body (2) and having a third recess (26) intended for receiving a warp wire (40) and extending perpendicularly to the first recess and the second recess, and first locking means (28) for locking a warp wire (40) in the third recess (26),
**characterised in that** the concavity of the concave bottom of the second recess (20) is oriented in the opposite direction to the concavity of the concave bottom of the first recess (14).

2. Splice plate according to claim 1, **characterised in that** second locking means (18) are associated with the first recess (14) so as to allow an end weft wire (42) to be locked inside the first recess.

3. Splice plate according to either claim 1 or claim 2, **characterised in that** the linking body (2) has a rear wall (6) from which two side wings (8, 10) extend, **in that** the first recess (14) opens out into the rear wall (6), and **in that** the second recess is obtained by making a cut-out (20) in the side wings (8, 10).

4. Splice plate according to claim 3, **characterised in that** the cut-outs in the side wings (8, 10) forming the second recess are each extended by an arc-shaped guide groove made in the side wings (8, 10).

5. Splice plate according to either claim 3 or claim 4, **characterised in that** the two side wings (8, 10) are located on either side of the third recess (26).

6. Splice plate according to claim 5, **characterised in that** the rear wall (6) of the linking body (2) has a fourth recess parallel to the third recess and aligned therewith, the opening of the fourth recess being oriented in the opposite direction to that of the third recess.

7. Splice plate according to any of claims 1 to 5, **characterised in that** the locking tab (4) is present in the form of a substantially flat plate (24), in which a groove (26) forming the third recess is made.

8. Splice plate according to any of claims 1 to 6, **characterised in that** it is made from a cut and folded metal sheet.

9. Assembly formed of a cable tray segment and at least one splice plate, **characterised in that** at least one splice plate is a splice plate according to any of claims 1 to 8.

10. Assembly according to claim 9, **characterised in that** each splice plate is a splice plate according to any of claims 1 to 8.

11. Assembly according to either claim 9 or claim 10, **characterised in that** the wire cable tray segment (38) comprises both longitudinal warp wires (40, 40') and transverse weft wires (42), so as to define a raceway having a base that is delimited by two side walls, and **in that** each splice plate is mounted between two side walls of two aligned segments.
